Europäisches Patentamt

European Patent Office

Office européen des brevets

(19)

(11) **EP 0 766 863 B1**

(12) **FASCICULE DE BREVET EUROPEEN**

(45) Date de publication et mention
de la délivrance du brevet:
**25.09.2002 Bulletin 2002/39**

(51) Int Cl.⁷: **G11B 20/10**, G11B 11/10,
G11B 5/49

(21) Numéro de dépôt: **96915061.4**

(22) Date de dépôt: **19.04.1996**

(86) Numéro de dépôt international:
**PCT/FR96/00601**

(87) Numéro de publication internationale:
**WO 96/033490 (24.10.1996 Gazette 1996/47)**

(54) **PROCEDE DE LECTURE D'INFORMATIONS**

VERFAHREN ZUM LESEN VON INFORMATIONEN

METHOD FOR READING INFORMATION

(84) Etats contractants désignés:
**DE DK FR GB IT NL SE**

(30) Priorité: **21.04.1995 FR 9504820**

(43) Date de publication de la demande:
**09.04.1997 Bulletin 1997/15**

(73) Titulaires:
• **Thales**
**75008 Paris (FR)**
• **THOMSON multimedia**
**92648 Boulogne Cédex (FR)**

(72) Inventeurs:
• **AUDOIN, Michel**
**F-92402 Courbevoie Cédex (FR)**
• **HANNA, Charaf**
**F-92402 Courbevoie Cédex (FR)**
• **COLINEAU, Joseph**
**F-92402 Courbevoie Cédex (FR)**
• **DE VITO, Mario**
**F-92402 Courbevoie Cédex (FR)**

(74) Mandataire: **Chaverneff, Vladimir et al**
**THALES Intellectual Property,**
**13, avenue du Président S. Allende**
**94117 Arcueil Cédex (FR)**

(56) Documents cités:
**EP-A- 0 174 125      EP-A- 0 176 946**
**EP-A- 0 241 977      EP-A- 0 369 518**
**EP-A- 0 497 060      EP-A- 0 530 468**
**EP-A- 0 548 359      WO-A-94/15335**

**Description**

L'invention concerne un procédé de lecture de support d'enregistrement ainsi qu'un dispositif appliquant un tel procédé.

L'invention s'applique notamment à la lecture d'enregistrements magnétiques ou optiques et, plus particulièrement, à la lecture d'enregistrements à haute densité. Elle trouve une application préférentielle dans les systèmes d'enregistrements tels que les périphériques informatiques et tous systèmes professionnels.

Dans un enregistreur numérique, le décodage des informations binaires passe par la régénération du signal de référence temporelle, appelé signal d'horloge, qui a servi à l'enregistrement des informations. Ce signal d'horloge est le plus souvent réalisé par un oscillateur contrôlé en tension (VCO : Voltage Controlled Oscillator) inséré dans une boucle à verrouillage de phase (PLL : Phase Locked Loop) qui se synchronise sur les transitions du signal de lecture.

Dans un enregistreur multi-pistes, il est possible d'utiliser un seul signal d'horloge reconstruit pour l'ensemble des pistes, à condition que la synchronisation entre toutes les pistes inscrites sur la bande soit conservée.

Ceci suppose que les têtes d'enregistrement et les têtes de lecture soient alignées, et que la bande ne se déforme pas. Si ces conditions ne sont pas strictement respectées, les références temporelles des diverses pistes se décalent les unes par rapport aux autres, c'est le phénomène de glissement connu de l'homme de l'art sous la dénomination "skew".

Dans le cas où les informations binaires sont contenues sur un grand nombre de pistes parallèles, par exemple dans le cas où le pas entre pistes parallèles est de l'ordre de 10 à 20 $\mu m$, il est pratiquement impossible de maintenir ce phénomène de glissement dans des limites acceptables. Il est alors connu de réaliser un circuit de régénération d'horloge indépendant pour chaque piste. Ceci présente de nombreux inconvénients dont, en particulier, celui d'avoir à réaliser un grand nombre de circuits.

L'invention ne présente pas ces inconvénients.

L'invention a pour objet un procédé de lecture d'informations binaires inscrites sur un support et situées sur différentes pistes (p1,...,pX), lesdites informations binaires ayant été inscrites sur le support à la fréquence Fbit, caractérisé en ce qu'il comprend une étape de lecture desdites informations binaires à la fréquence d'échantillonnage $F_e$ supérieure à la fréquence Fbit et lisant simultanément les informations binaires de même ordre k sur les différentes pistes de façon à constituer une succession d'échantillons lus successifs ECH (k) pour chaque piste, ECH (k) étant l'échantillon lu d'ordre k, chaque échantillon lu d'ordre k ayant sa phase $\varphi(k)$ comprise entre 0 et $2\pi$, une étape d'interpolation permettant de calculer un échantillon interpolé I(k) de phase égale à $\pi$ correspondant à l'échantillon lu ECH (k), à partir de l'échantillon lu ECH (k) et des i + j échantillons lus (ECH(k-i), ... , ECH (k+j)) sur la même piste et qui encadrent l'échantillon lu ECH(k) de façon que :

$$I(k) = a_{k-i}\, ECH(k-i) + ... + a_k\, ECH(k) + ... + a_{k+j}\, ECH(k+j),$$

les coefficient $a_{k-i}$, ... , $a_k$, ... , $a_{k+j}$ ayant des valeurs dépendant de la loi d'interpolation choisie, et une étape de validation permettant de générer une information (VAL) destinée à valider ou à invalider l'échantillon interpolé I(k), ladite étape d'interpolation incorporant des phases de retard de façon que les échantillons successifs traités représentent les informations successives d'une même piste.

La présente invention a aussi pour objet un système de lecture d'information binaires inscrites sur un support magnétique et situées sur différentes pistes (p1,..., pX), lesdites informations binaires ayant été inscrites sur le support à la fréquence Fbit, comprenant :

- des moyens de lecture permettant de lire lesdites informations binaires à une fréquence d'échantillonnage $F_e$ supérieure à la fréquence Fbit et lisant simultanément les informations binaires de même rang k sur les différentes pistes de façon à obtenir une succession d'échantillons lus successifs ECH(k) pour chaque piste, k étant le rang de l'échantillon ECH(k) sur chaque piste ;

- des moyens d'interpolation permettant de calculer un échantillon interpolé I(k) pour chaque échantillon lu ECH(k) à partir de l'échantillon ECH(k) et des i + j échantillons lus qui encadrent l'échantillon ECH(k) sur la même piste de façon que :

$$I(k) = a_{k-i}\, ECH(k-i) + ... + a_k\, ECH(k) + ... + a_{k+j}\, ECH(k+j),$$

les coefficients $a_{k-i}$, ... , $a_k$, ... , $a_{k+j}$ ayant des valeurs dépendant de la loi d'interpolation choisie, et des moyens de validation permettant de générer une information (VAL) destinée à valider ou à invalider l'échantillon interpolé I(k), lesdits moyens d'interpolation prévoyant des moyens de retard de façon que les échantillons successifs traités représentent des informations successives d'une même piste.

Un avantage de l'invention est d'éviter la multiplication des circuits de régénération d'horloge et des circuits de décodage des informations binaires.

D'autres caractéristiques et avantages de l'invention apparaîtront à la lecture d'un mode de réalisation préférentiel fait avec référence aux figures ci-annexées parmi lesquelles :

- la figure 1 représente un exemple de système d'enregistrement/lecture auquel s'applique l'invention ;
- la figure 2 représente un schéma synoptique de principe du dispositif de l'invention ;
- la figure 3 représente un schéma synoptique de l'interpolateur (INT) représenté en figure 2 ;
- la figure 4 représente un schéma synoptique de l'opérateur de tri (TR) représenté en figure 2 ;
- la figure 5 représente une première application du dispositif selon l'invention ;
- la figure 6 représente une deuxième application du dispositif selon l'invention ;
- la figure 7 représente la vue selon la coupe A-A de la figure 6 d'un premier mode de réalisation de la deuxième application ;
- la figure 8 représente la vue selon la coupe A-A de la figure 6 d'un deuxième mode de réalisation de la deuxième application.

Sur toutes les figures, les mêmes repères désignent les mêmes éléments.

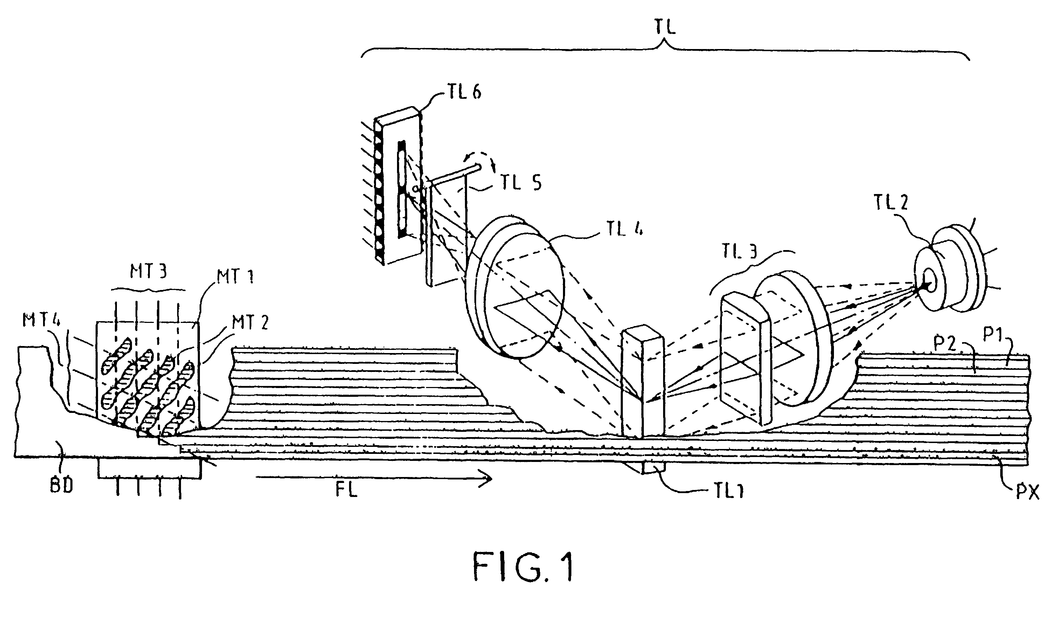

La figure 1 représente un exemple de système d'enregistrement/lecture auquel s'applique l'invention. L'enregistrement se fait avec une tête matricielle et la lecture avec un système magnéto-optique. De façon plus générale, l'invention concerne d'autres systèmes d'enregistrement/lecture. Pour ces autres systèmes, le support sur lequel l'information est enregistrée peut ne pas être un support magnétique mais peut être un support optique. Il peut se présenter sous la forme d'un disque et non pas d'une bande. La lecture peut être réalisée par tout moyen connu autre qu'un faisceau lumineux, par exemple par une tête multipiste à éléments magnéto-résistifs.

Le système décrit en figure 1 comporte un support d'enregistrement tel qu'une bande magnétique BD. Une tête d'enregistrement matricielle MT1 comporte une matrice de têtes élémentaires MT2 commandée par des conducteurs de sélection de lignes MT3 et des conducteurs de sélection de données MT4. Cette tête permet d'enregistrer sur la bande BD différentes pistes d'informations p1, p2, ... pX.

Sur la partie droite de la figure, on a représenté une tête de lecture magnéto-optique TL telle que celle décrite dans la demande de brevet français n° 89 17313 déposée le 28 novembre 1989 au nom de THOMSON CONSUMER ELECTRONICS.

Cette tête TL comporte un transducteur magnéto-optique TL1, par exemple à effet Kerr, disposé parallèlement au plan de la bande magnétique et dont la grande longueur est transverse à la longueur de la bande. Une source lumineuse TL2 éclaire, par un faisceau de lumière polarisée et à travers un système de focalisation TL3, le transducteur TL1 de telle façon que le faisceau lumineux soit focalisé sensiblement selon une ligne sur une face du transducteur TL1 à proximité de la bande magnétique BD. Le faisceau réfléchi par le transducteur TL1 voit sa polarisation modifiée en fonction du champ magnétique sur la bande. Le faisceau réfléchi est transmis par un système de focalisation TL4 et un système de suivi de piste TL5 à un détecteur optoélectronique TL6.

De façon préférentielle, le détecteur TL6 est un dispositif photosensible à transfert de charges constitué d'une zone photosensible et d'une zone non photosensible. La zone photosensible est alors préférentiellement constituée d'une barrette linéaire de Np pixels et la zone non photosensible d'un registre de lecture constitué d'étages de transfert. Les charges générées dans un pixel de la zone photosensible sont recueillies dans un étage de transfert du registre de lecture. Le détecteur TL6 comprend au moins autant de pixels qu'il y a de pistes sur la bande.

Le transducteur TL1 réfléchit vers le détecteur TL6 un faisceau constitué en réalité d'un ensemble de faisceaux de lecture de pistes, chacun ayant eu sa polarisation influencée par une piste de la bande magnétique. L'ensemble de ces faisceaux de lecture est reçu par le détecteur TL6 qui permet ainsi de détecter les informations lues sur chaque piste de la bande BD.

Lorsque la bande défile dans le sens indiqué par la flèche FL, le transducteur magnéto-optique TL1 lit simultanément les informations binaires de même rang R (R = 1, 2, ... , k-1, k, k+1, ...) situées sur les X pistes parallèles p1, p2, ... , pX.

Les informations lues peuvent avoir été enregistrées au même instant. Il peut aussi s'agir d'informations enregistrées de façon décalée dans le temps. Préférentiellement, les informations lues sont échantillonnées à une fréquence $F_e$ supérieure à la fréquence Fbit avec laquelle elles ont été inscrites sur la bande BD.

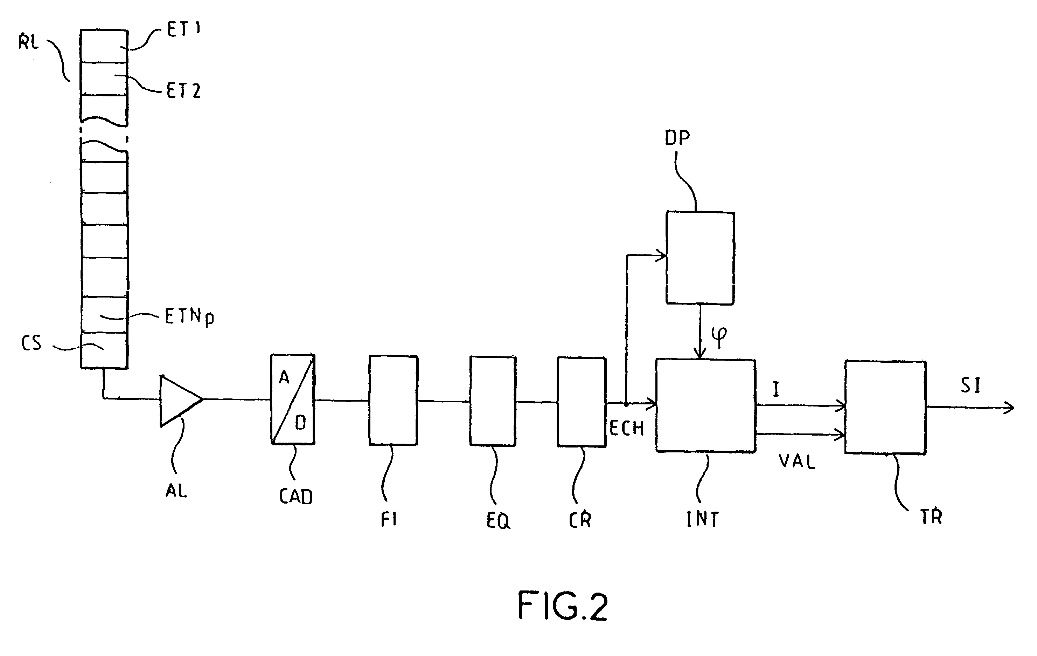

La figure 2 représente un schéma synoptique de principe du dispositif de l'invention.

Pour des raisons de commodité, seul le registre de lecture RL du détecteur TL6 a été représenté sur la figure 2. Le registre de lecture RL est constitué d'une succession de $N_p$ étages de transfert ET1, ET2, .... ,ETNp. Le circuit de sortie CS du registre de lecture est constitué d'un convertisseur charges-tension comprenant une diode de lecture et un premier amplificateur de lecture non représentés sur la figure.

Le signal issu du circuit de sortie CS est constitué d'un train d'informations en série. De façon connue en soi, le signal issu du circuit de sortie CS passe successivement à travers un deuxième amplificateur de lecture AL, un convertisseur analogique-digital CAD, un filtre passe-haut FI, un égaliseur EQ et un correcteur CR. Le correcteur CR est un circuit corrigeant la diaphonie existant entre un pixel et les deux pixels voisins entourant ce pixel. Le correcteur CR peut être, par exemple, tel que celui décrit dans la demande de brevet déposée en France au nom des Demanderesses le 22 décembre 1992 et enregistrée sous le numéro 92 15474.

Comme cela a été mentionné précédemment, les informations lues simultanément par le transducteur TL1 sont les informations de même rang k contenues sur les X pistes parallèles. Les opérateurs numériques tels que le filtre passe-haut FI, l'égaliseur EQ et le correcteur CR, possèdent alors autant de circuits de retard qu'il est nécessaire de façon que les échantillons successifs qu'ils traitent représentent les informations successives d'une même piste.

Dans un canal de transmission analogique, on associe au signal analogique lu x(t) une phase variant continûment de 0 à $2\pi$. La démodulation s'effectue généralement en observant le signe du signal x(t) à l'instant ou la phase est égale à $\pi$.

Dans un canal de transmission numérique, tel que celui de l'invention, le signal lu est une suite d'échantillons dont les phases sont discrétisées. On ne dispose pas alors nécessairement d'échantillons dont la phase est égale à $\pi$. Le dispositif de l'invention consiste à calculer par interpolation, pour chaque échantillon, un nouvel échantillon dont la phase est égale à $\pi$ en s'aidant des échantillons voisins d'une même piste. Le dispositif selon l'invention permet de minimiser les probabilités d'erreur de lecture car, lors du décodage, l'amplitude du signal détecté est calculé à sa phase optimale. Il s'en suit que l'invention est particulièrement avantageuse pour des signaux véhiculés dans des canaux à haute densité ou à haut débit possédant des rapports signaux sur bruit faibles.

La cadence d'écriture des informations binaires, communément appelées bits, contenues sur une même piste définit la fréquence Fbit. Les échantillons sont prélevés à la fréquence d'échantillonnage $F_e$ supérieure à Fbit et le rapport de $F_e$ sur Fbit définit le facteur de suréchantillonnage.

Selon l'invention, chaque échantillon ECH issu du correcteur CR est envoyé simultanément dans un circuit de suivi de phase DP et dans un interpolateur INT.

Le circuit de suivi de phase DP a pour fonction d'estimer la phase $\varphi$ de l'échantillon ECH. L'information de phase $\varphi$ estimée est envoyée dans l'interpolateur INT.

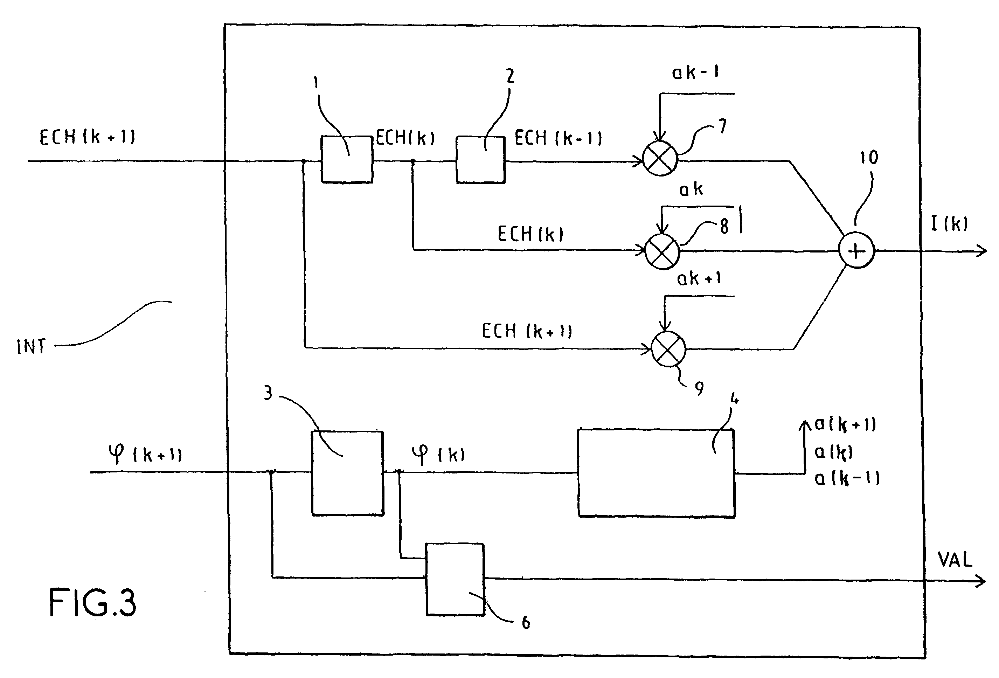

L'interpolateur INT reçoit donc l'amplitude et la phase estimée de chaque échantillon ECH. Comme cela sera précisé en figure 3, l'interpolateur INT a pour fonction de calculer par interpolation la valeur I à affecter à l'échantillon de rang k à partir de la valeur de l'échantillon ECH(k) de rang k et de valeurs d'échantillons qui encadrent l'échantillon ECH(k) sur une même piste.

Selon l'invention, l'interpolateur INT permet aussi le calcul d'un signal de validation VAL associé à l'échantillon interpolé I et permettant de valider ou d'invalider l'échantillon I. Le principe de cette validation est décrit en détail à la figure 3.

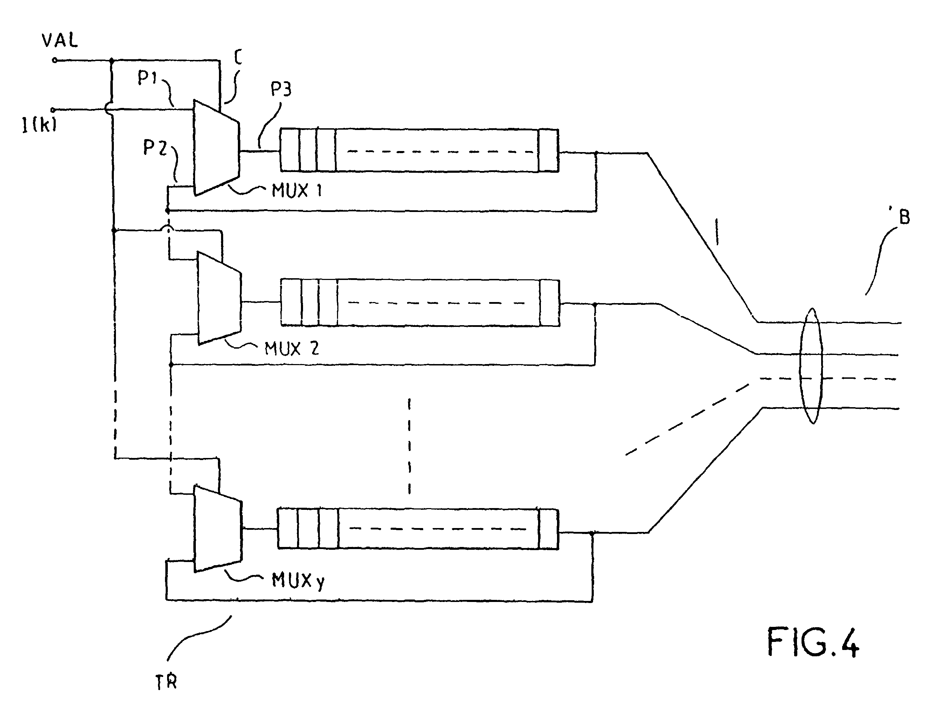

L'échantillon interpolé I ainsi que le signal de validation VAL qui lui est associé sont alors envoyés dans un opérateur de tri TR qui a pour fonction de faire le tri des échantillons I de façon à ne conserver que ceux qui sont validés. Le signal SI obtenu en sortie de l'opérateur TR est alors soit constitué de la succession des bits validés, soit constitué de la succession de mots regroupant les bits validés par paquets comme cela est décrit en figure 4.

La figure 3 représente un schéma synoptique de principe de l'interpolateur représenté en figure 2.

Selon le mode de réalisation représenté en figure 3, le calcul d'interpolation de l'échantillon I(k) de rang k est effectué à l'aide des trois valeurs échantillonnées ECH(k-1), ECH(k) et ECH(k+1). De façon plus générale l'invention concerne cependant les modes de réalisation pour lesquels le calcul de l'échantillon interpolé I(k) est effectué à l'aide des i + j + 1 échantillons ECH(k-i), ECH(k-(i-1)), ... , ECH(k), ... , ECH(k+j) où i et j sont des nombres entiers pouvant être égaux ou non.

L'interpolateur de la figure 3 comprend trois opérateurs de retard 1,2,3.

L'opérateur de retard 1 contient X échantillons et permet de restituer à sa sortie l'échantillon ECH(k - 1) de rang k lorsqu'il reçoit à son entrée l'échantillon ECH (k + 1) de rang k+1.

De même, l'opérateur de retard 2 dont l'entrée est reliée à la sortie de l'opérateur de retard 1, contient X échantillons et permet de restituer à sa sortie l'échantillon ECH(k-1) lorsque son entrée reçoit l'échantillon ECH(k).

Selon le mode de réalisation préférentiel, l'échantillon interpolé I(k) de rang k est calculé à l'aide de la loi d'interpolation de Lagrange. De façon plus générale, cependant, d'autres lois d'interpolation, basées sur des critères d'optimisation différents peuvent également convenir.

Selon le mode de réalisation décrit en figure 3, l'échantillon interpolé I(k) calculé s'écrit :

$$I(k) = a_{k-1}\ ECH(k-1) + a_k\ ECH(k) + a_{k+1}\ ECH(k+1).$$

A cette fin, les échantillons ECH(k-1), ECH(k) et ECH(k+1) sont envoyés sur les multiplicateurs respectifs 7, 8 et 9, lesquels ont pour fonction d'effectuer les multiplications respectives de ECH(k-1) avec $a_{k-1}$, de ECH(k) avec $a_k$ et de ECH(k+1) avec $a_{k+1}$. Les résultats issus des trois multiplicateurs 7, 8 et 9 sont alors envoyés dans un sommateur 10 de façon à calculer l'échantillon interpolé I(k).

Selon l'invention, les valeurs des coefficient $a_{k-1}$, $a_k$ et $a_{k+1}$ dépendent de la loi d'interpolation choisie. Leurs valeurs sont sélectionnées en fonction de la valeur de la phase φ (k) de l'échantillon de rang k.

Au sein de l'interpolateur, la phase φ(k) apparaît en sortie de l'opérateur de retard 3 lorsque ce dernier reçoit sur son entrée la phase φ (k+1) de l'échantillon de rang k+1.

La phase φ(k) est alors envoyée dans l'opérateur de recherche de segment de phase 4. La phase φ(k) a sa valeur comprise dans l'intervalle [0,2 π]. Selon l'invention, l'intervalle [0,2 π] est divisé en N segments de phase de largeur $\frac{2\pi}{N}$. A titre d'exemple, N est choisi égal à 8. L'invention concerne cependant d'autres valeurs de N choisies préférentiellement d'autant plus élevées que le facteur de suréchantillonnage est faible.

La phase φ(k) appartient à l'un des N segments de phase. A chaque segment de phase, est associé un ensemble de trois valeurs précalculées pour les coefficients $a_{k-1}$, $a_k$ et $a_{k+1}$. L'opérateur de recherche de segment de phase a donc aussi pour fonction d'affecter au calcul d'interpolation de l'échantillon I(k) les valeurs des coefficients associées au segment de phase auquel appartient la phase φ(k).

Les valeurs des coefficients $a_{k-1}$, $a_k$ et $a_{k+1}$ sont prélevées dans une table. Cette table peut être, par exemple, une mémoire de type PROM. Le calcul d'interpolation de I(k) est alors effectué en temps réel. Les échantillons ECH(k-1), ECH(k) et ECH(k+1) sont respectivement multipliés, en temps réel, aux coefficients $a_{k-1}$, $a_k$, et $a_{k+1}$.

Selon un autre mode de réalisation, les multiplications des échantillons ECH(k-1), ECH(k) et ECH(k+1) par les coefficients respectifs $a_{k-1}$, $a_k$ et $a_{k+1}$ sont effectuées au préalable. Pour chaque segment de phase chacune des valeurs possibles d'échantillon est alors préalablement multipliée avec chacun des coefficients $a_{k-1}$, $a_k$ et $a_{k+1}$. Selon ce mode de réalisation, ce sont les valeurs des échantillons ainsi que les valeurs des phases qui permettent l'adressage au sommateur 10 des résultats préalablement calculés.

Selon les modes de réalisation qui viennent d'être décrits, l'échantillon I(k) est calculé à partir de 3 valeurs échantillonnées ECH(k-1), ECH(k) et ECH(k+1) et, de façon préférentielle, le facteur de suréchantillonnage est égal à 2. L'invention concerne cependant d'autres modes de réalisation tel que, par exemple, celui pour lequel l'interpolation est effectuée à partir de cinq échantillons successifs avec un facteur de suréchantillonnnage égal à 1,5.

Le suréchantillonnage produit en moyenne Ne échantillons pour Nbits bits. Le calcul d'interpolation conduit au calcul de Ne échantillons I(k). Parmi les échantillons I(k) seuls doivent être retenus les Nbits à affecter aux bits. Il est alors nécessaire que chaque échantillon I(k) s'accompagne d'une information permettant de le valider ou de l'invalider.

Cette information, notée VAL sur la figure 4, est générée par l'opérateur de validation 6.

L'opérateur de validation 6 reçoit en entrée la phase φ(k) de l'échantillon de rang k et la phase φ(k+1) de l'échantillon de rang k+1. La différence de phase moyenne entre deux échantillons successifs est égale à $2\pi\frac{Fbit}{Fe}$.

Il est alors possible de définir, autour de la phase π désirée, une fenêtre de validation allant de $\pi - \pi\frac{Fbit}{Fe}$ à $\pi + \pi\frac{Fbit}{Fe}$.

L'opérateur de validation 6 compare les valeurs des phases φ(k) et φ(k+1) à la borne supérieure de la fenêtre de validation en prolongeant la valeur de φ(k+1) sur le segment [0,4 π] si nécessaire.

Si la borne supérieure $\pi + \pi\frac{Fbit}{Fe}$ appartient à l'intervalle [φ(k), φ(k + 1)[, l'information VAL prend une valeur signifiant que l'échantillon calculé I(k) doit être validé.

Si la borne supérieure $\pi + \pi\frac{Fbit}{Fe}$ n'appartient pas à l'intervalle {φ (k), φ(k + 1)[, l'information VAL prend une valeur signifiant que l'échantillon calculé I(k) ne doit pas être validé.

La contrainte de comparaison sur une seule borne permet de garantir une validation d'un échantillon même en présence de changements de rythme d'information dus, par exemple, à des variations de vitesse de défilement de bande.

L'information obtenue en sortie de l'opérateur de tri peut être constituée de la seule succession des bits validés. Dans le cas, par exemple, de la lecture d'une seule piste, l'opérateur de tri est alors constitué d'une mémoire opérant au rythme du signal de validation.

L'information obtenue en sortie de l'opérateur de tri peut être aussi constituée d'une succession de mots regroupant les bits validés par paquets comme cela est décrit en figure 4.

Pour former un mot de y bits, y étant un nombre entier par exemple égal à 10, l'opérateur de tri TR est alors constitué de y multiplexeurs MUX1, MUX2, ..., MUXy, et de y registres à décalage.

Chaque multiplexeur comprend trois pôles P1, P2, P3 et une entrée de commande C. Sous l'action d'une commande appliquée à C, la liaison s'établit soit entre les pôles P1 et P3, soit entre les pôles P2 et P3.

Chaque multiplexeur a ses pôles P3 et P2 reliés respectivement à l'entrée et à la sortie d'un registre à décalage. Chaque registre à décalage contient X étages, X étant le nombre de pistes lues. Le pôle P1 du multiplexeur de rang 1, MUX1, reçoit le signal interpolé I(k) et le pôle P1 du multiplexeur de rang x supérieur à 1 (x = 2, ..., y) est relié au pôle P2 du multiplexeur de rang x-1. Les sorties des y registres à décalage constituent, par ailleurs, un bus de données B. Les entrées de commande C de tous les multiplexeurs sont reliées entre elles et au signal de validation VAL.

A chaque coup d'horloge, c'est-à-dire au rythme de la fréquence d'échantillonnage Fe, le signal de validation est appliqué simultanément à toutes les commandes C des multiplexeurs. Quand le signal VAL doit valider l'échantillon I(k), la liaison s'établit entre les pilles P1 et P3 de chaque multiplexeur. Il s'en suit que l'échantillon I(k) validé accède au registre à décalage de rang 1, alors que chaque registre à décalage de rang x supérieur à 1 (x = 2, ... , y) reçoit, en moyenne, sur son entrée l'information issue du registre à décalage de rang x-1. Au bout d'un nombre de coups d'horloge égal à y fois le facteur de suréchantillonnage, un mot de y bits est constitué par l'information stockée dans les y étages de sortie des y registres à décalage. Un dispositif de comptage synchronisé du nombre de bits stockés pour chaque piste garantit l'intégralité du mot reconstitué. Ce mot est alors récupéré sur le bus de données B.

Un avantage de l'invention est de travailler à une fréquence qui n'est pas la fréquence Fbits.

Selon le mode de réalisation décrit en figure 2, le détecteur optoélectronique TL6 est un dispositif à transfert de charges dont le registre de lecture ne comprend qu'un seul circuit de sortie.

Selon d'autres modes de réalisation, cependant, le registre de lecture du détecteur optoélectronique TL6 peut avoir plusieurs sorties. Avantageusement, il est alors possible d'évacuer les charges contenues dans le registre de lecture à haut débit.

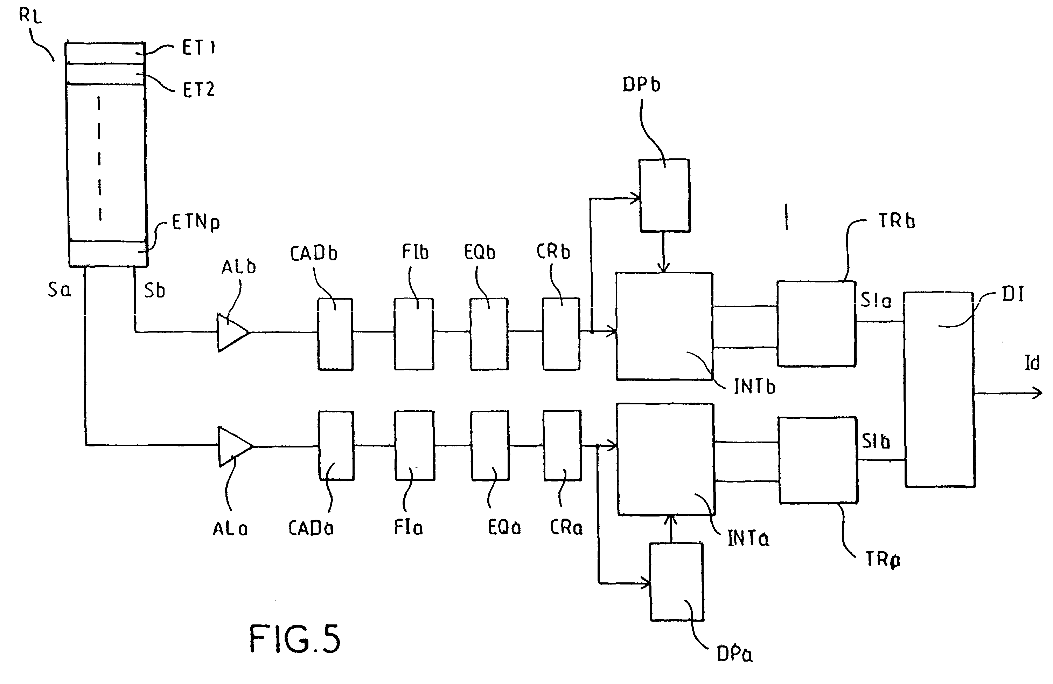

La figure 5 représente une première application du dispositif selon l'invention pour laquelle le registre de lecture comprend deux sorties.

Selon cette première application, le registre de lecture est dédoublé de façon connue en soi en un registre dit "pair" et un registre dit "impair". Le registre pair récupère les charges accumulées dans les pixels de rang pair de la zone photosensible et le registre impair récupère les charges accumulées dans les pixels de rang impair de la zone photosensible.

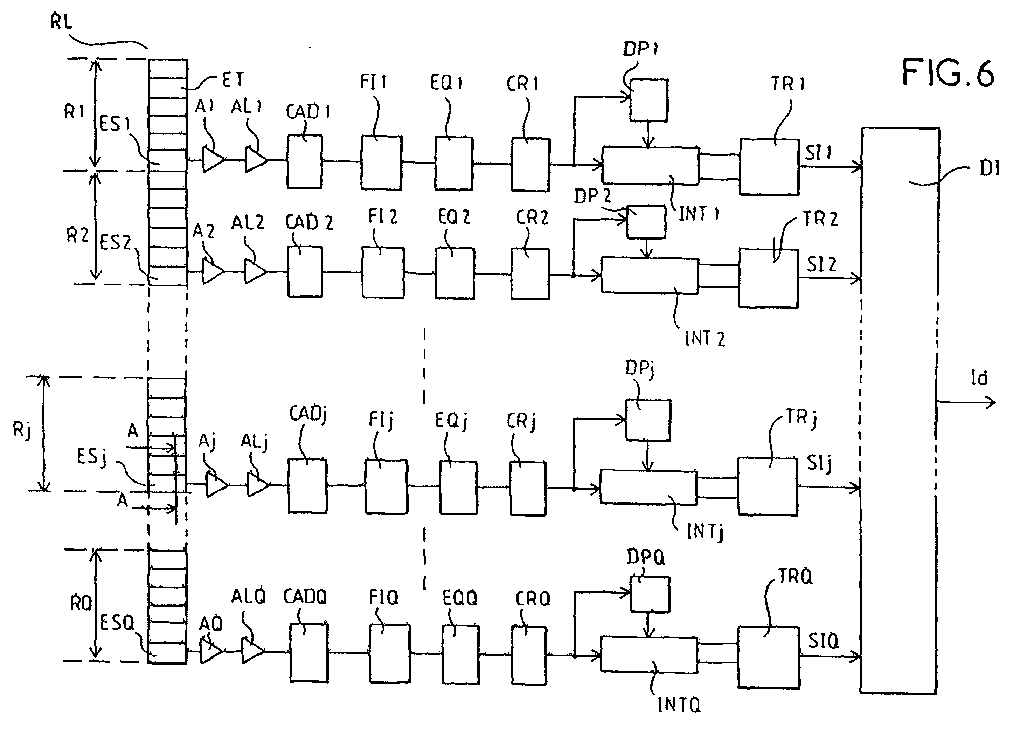

De façon symbolique cette division du registre de lecture en registres pair et impair a été représentée sur la figure 6 par la présence des deux sorties distinctes Sa et Sb.

Chacun des signaux issus des sorties respectives Sa et Sb est alors transféré dans une chaîne de lecture du type de celle décrite en figure 3.

Afin de reconstituer dans sa continuité l'information désirée, un dispositif DI permet de réarranger les signaux SIa et SIb issus des opérateurs de tri respectifs TRa et TRb.

La figure 6 représente une deuxième application du dispositif selon l'invention pour laquelle le registre de lecture comprend un nombre Q de sorties.

Le registre de lecture RL est constitué de Q sous-registres (R1, R2, ... , Rj, ... , RQ) et chaque sous-registre comprend M étages de transfert. Pour des raisons de commodité le nombre M a été choisi, à titre d'exemple, égal à 6. Le dispositif selon l'invention concerne cependant d'autres modes de réalisation où M est un nombre entier quelconque pouvant être différent pour deux sous-registres différents. Les M étages de transfert de chaque sous-registre Rj se succèdent de façon que le transfert des charges s'effectue de l'étage de rang 1 vers l'étage de rang M. La diode de lecture du convertisseur charges-tension du sous-registre Rj de rang j est intégrée dans l'étage de transfert de rang M du sous-registre Ri. Cet étage de transfert est noté ESj sur la figure 6 et sera par la suite appelé étage de sortie intermédiaire.

Avantageusement, le registre de lecture RL est tel que les étages de transfert des sous-registres Rj (j = 1, 2, ... , Q) se succèdent de façon que l'étage de sortie intermédiaire ESj du sous-registre Rj jouxte l'étage de rang 1 du sous-registre Rj + 1.

Le convertisseur charges-tension de chaque sous-registre Rj est globalement constitué de la diode de lecture contenue dans l'étage de sortie intermédiaire ESj et d'un premier amplificateur de lecture Aj pouvant ou non, en tout ou partie, être intégré au composant auquel appartient le registre de lecture.

Comme cela est connu de l'homme de l'art, un transistor MOS (non représenté sur la figure) effectue une précharge de la capacité de la diode avant l'arrivée de la charge véhiculée dans le sous-registre Rj.

Chacun des signaux issus des amplificateurs Aj (j = 1, 2, ... , Q) est alors transféré dans une chaîne de lecture du type de celle décrite en figure 2. Afin de reconstituer dans sa continuité l'information désirée Id, les signaux SI1 SI2, ... , SIj, ... , SIQ issus des opérateurs de tri respectifs TR1, TR2, ... , TRj, ... , TRQ sont réarrangés dans un dispositif DI.

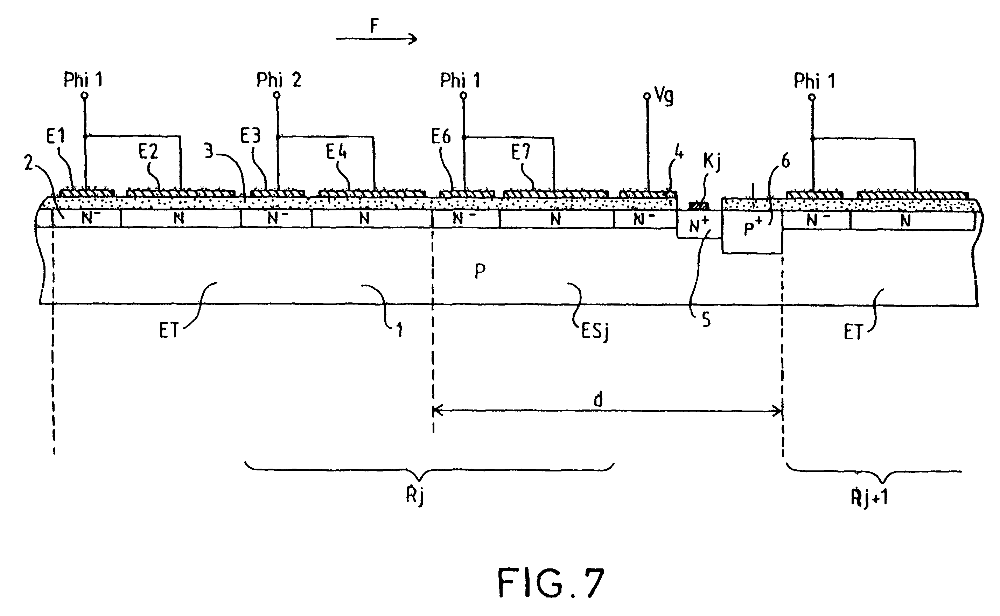

La figure 7 représente la vue selon la coupe A-A de la figure 6.

Sur la figure 7, sont représentées une fraction du sous-registre Rj de rang j ainsi qu'une fraction du sous-registre Rj + 1 de rang j + 1. La fraction représentée du sous-registre Rj est constituée d'un étage de transfert ET de type connu et de l'étage de sortie intermédiaire ESj. La fraction représentée du sous-registre Rj + 1 est une fraction de l'étage de transfert ET de type connu qui jouxte l'étage de sortie intermédiaire ESj.

A titre d'exemple, le mode de transfert choisi est du type biphasé. L'invention concerne cependant des modes de transfert dont le nombre de phases est supérieur à deux.

L'étage de transfert ET est formé dans un substrat 1 dopé P. Une couche 2 dopée N recouvre le substrat 1 de façon à constituer un canal enterré. Comme cela est connu de l'homme de l'art, en mode biphasé, la couche 2 dopée N est constituée d'une succession de zones alternativement dopées N⁻ et N. Par zone dopée N⁻ il faut entendre une zone dopée N mais en moins forte proportion qu'une zone dopée N. Une couche électriquement isolante 3 recouvre la couche dopée 2. Les électrodes qui permettent le transfert sont réalisées au-dessus de la couche électriquement isolante 3.

Selon le mode de transfert biphasé choisi comme exemple, quatre électrodes E1, E2, E3, E4 participent au transfert des charges dans l'étage ET.

Dans le sens F défini comme allant du sous-registre Rj vers le sous-registre Rj + 1, les 4 électrodes successives E1, E2, E3, E4 recouvrent respectivement des zones dopées N⁻, N, N⁻, N du canal enterré 2. Les deux électrodes E1 et E2 sont reliées à la même phase Phi1 et les deux électrodes E3 et E4 sont reliées à la même phase Phi2.

Les phases Phi1 et Phi2 sont ajustées de façon connue afin d'assurer le transfert des charges de l'étage de transfert ET du sous-registre Rj vers l'étage de sortie intermédiaire ESj du même sous-registre.

L'étage de sortie intermédiaire ESj est aussi formé dans le substrat 1 dopé P. Dans le sens de transfert des charges, l'étage de sortie intermédiaire comprend successivement : deux électrodes E6 et E7 reliées à la même phase Phi1, une électrode de sortie 4 sur laquelle est appliquée une tension Vg, une zone 5 dopée N⁺ et une zone 6 dopée P⁺, les zones 5 et 6 étant formées toutes deux dans le substrat 1.

La diode de lecture est formée par la jonction entre la zone dopée N⁺ et le substrat 1 dopé P.

Les électrodes E6 et E7 sont situées en surface de la couche électriquement isolante 3 et recouvrent respectivement une zone dopée N⁻ et une zone dopée N du canal enterré 2. L'électrode 4 est elle aussi située en surface de la couche 3 et recouvre une zone dopée N⁻. La tension Vg appliquée sur l'électrode 4 permet le transfert des charges dans la diode de lecture. La zone 6 dopée P⁺ constitue une barrière d'isolation entre le sous-registre Rj et le sous-registre Rj + 1. La tension qui apparaît aux bornes de la diode de lecture est appliquée à l'entrée du premier amplificateur de lecture Aj (non représenté sur la figure) par l'intermédiaire de la connexion conductrice Kj.

Lors du transfert des charges de la zone photosensible vers le registre de lecture, l'étage de sortie intermédiaire récupère les charges accumulées dans le pixel qui le jouxte. Avantageusement, le transfert des charges vers l'amplificateur de sortie Aj de chaque sous-registre Ri s'effectue alors sans temps mort.

La zone 5 dopée N⁺ s'étire dans la direction perpendiculaire à la direction de propagation des charges sur toute la largeur de l'étage intermédiaire de sortie. Il s'en suit que le champ électrique qui permet d'accélérer les charges vers la diode est constant. L'accélération des charges étant uniforme, leur transfert s'effectue lui aussi uniformément et, partant, plus rapidement que dans les registres de lecture de type connu.

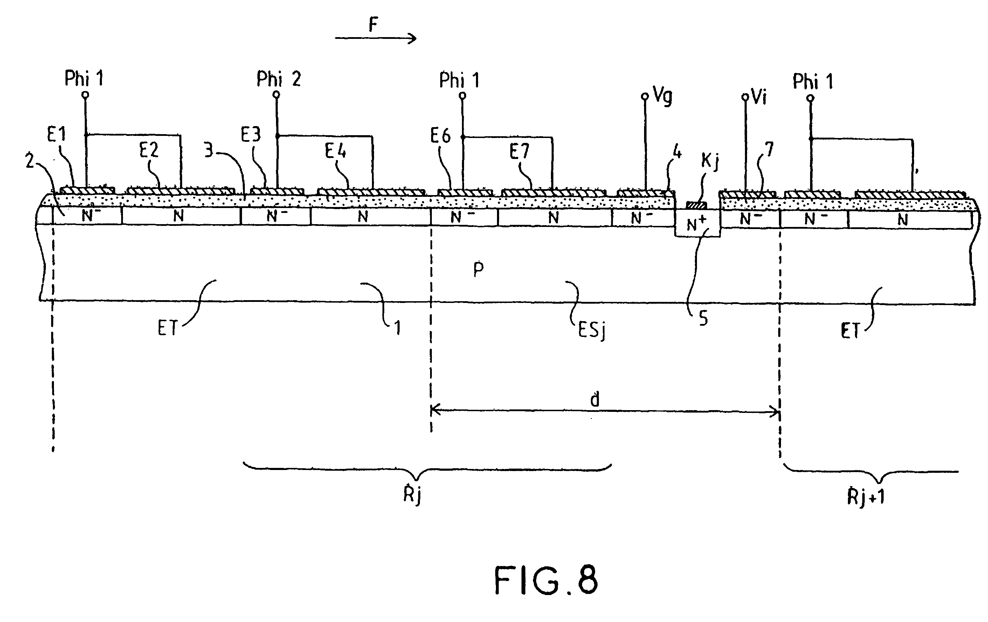

La figure 8 représente la vue la coupe A-A de la figure 6 d'un deuxième mode de réalisation du registre de lecture.

Comme la figure 7, la figure 8 représente une fraction du sous-registre Rj de rang j ainsi qu'une fraction du sous-registre Rj + 1 de rang j + 1. Le mode de transfert choisi est du type biphasé, mais, comme cela a été mentionné précédemment, l'invention concerne également des modes de transfert dont le nombre de phases est supérieur à deux.

Les étages de transfert ET représentés en figure 8 sont identiques à ceux représentés en figure 7. Il en est de même de l'étage de sortie intermédiaire ESj sauf en ce qui concerne l'élément permettant de constituer la barrière d'isolation entre le sous-registre Rj et le sous-registre Rj + 1. La barrière d'isolation est réalisée par une électrode 7 sur laquelle est appliqué un potentiel Vi. L'électrode 7 est située en surface de la couche 3 et recouvre une zone dopé N⁻.

Avantageusement, l'utilisation d'un dispositif photosensible tel que celui décrit en figure 6 permet de fournir des débits d'information très élevés. A titre d'exemple, l'utilisation d'un détecteur optoéelectronique TL6 possédant 1024 pixels et 32 sorties et utilisé pour la lecture d'une bande de 1 000 pistes fournit un débit d'informations de l'ordre de plusieurs centaines de Mbits par seconde.

**Revendications**

1. Procédé de lecture d'informations binaires inscrites sur un support et situées sur différentes pistes (p1,...,pX), lesdites informations binaires ayant été inscrites sur le support à la fréquence Fbit, **caractérisé en ce qu'**il comprend

   une étape de lecture desdites informations binaires à la fréquence d'échantillonnage $F_e$ supérieure à la fréquence Fbit et lisant simultanément les informations binaires de même ordre k sur les différentes pistes de façon à constituer une succession d'échantillons lus successifs ECH (k) pour chaque piste, ECH (k) étant l'échantillon lu d'ordre k, chaque échantillon lu d'ordre k ayant sa phase φ(k) comprise entre 0 et 2π,

   une étape d'interpolation permettant de calculer un échantillon interpolé I(k) de phase égale à π correspondant à l'échantillon lu ECH(k), à partir de l'échantillon lu ECH (k) et des i + j échantillons lus (ECH(k-i), ... , ECH (k+j)) sur la même piste et qui encadrent l'échantillon lu ECH(k) de façon que :

$$I(k) = a_{k-i} \, ECH(k-i) + ... + a_k \, ECH(k) + ... + a_{k+j} \, ECH(k+j),$$

les coefficient $a_{k-i}$, ... , $a_k$, ... , $a_{k+j}$ ayant des valeurs dépendant de la loi d'interpolation choisie, et
une étape de validation permettant de générer une information (VAL) destinée à valider ou à invalider l'échantillon interpolé I(k),
ladite étape d'interpolation incorporant des phases de retard de façon que les échantillons successifs traités représentent les informations successives d'une même piste.

2. Procédé de lecture selon la revendication 1, **caractérisé en ce que** l'étape de validation consiste à comparer la quantité $\pi + \pi$ à l'intervalle $[ \varphi(k), \varphi(k+1)[$ de façon que ladite information (VAL) permette de valider l'échantillon interpolé I(k) si $\pi + \pi$ appartient audit intervalle ou de ne pas valider l'échantillon interpolé I(k) si $\pi + \pi$ n'appartient pas audit intervalle.

3. Procédé de lecture selon l'une quelconque des revendications 1 ou 2, **caractérisé en ce que** les valeurs des coefficients $a_{k-i}$, ... , $a_k$, ... , $a_{k+j}$ sont comprises dans des tables et sont sélectionnées en fonction de la valeur de la phase $\varphi(k)$ de l'échantillon ECH (k).

4. Procédé de lecture selon la revendication 3, **caractérisé en ce que** les valeurs desdits coefficients sont précalculées pour N segments de phase qui divisent l'intervalle $[0, 2 \pi]$ et **en ce que** les valeurs choisies pour lesdits coefficients sont celles correspondant à l'intervalle de phase auquel appartient la phase $\varphi(k)$ de l'échantillon ECH (k).

5. Procédé de lecture selon l'une quelconque des revendications 1 ou 2, **caractérisé en ce que** les valeurs que peuvent prendre les grandeurs $a_{k-i} \, ECH(_{k-i})$, ... , $a_k \, ECH(k)$, .... , $a_{k+j} \, ECH(k+j)$ sont précalculées pour N segments de phase qui divisent l'intervalle $[0, 2 \pi]$, les valeurs des échantillons ECH (k-i), ... , ECH(k), ... , ECH(k+j) étant prises parmi toutes les valeurs pouvant être prises par lesdits échantillons, et **en ce que** les valeurs choisies pour lesdites grandeurs sont celles correspondant à la valeur de l'échantillon ECH(k) et à l'intervalle de phase auquel appartient la phase $\varphi(k)$ de l'échantillon ECH(k).

6. Procédé de lecture selon l'une quelconque des revendications précédentes, **caractérisé en ce qu'**il comprend une étape de tri des échantillons interpolés selon que lesdits échantillons interpolés doivent être validés ou non validés.

7. Procédé de lecture selon la revendication 6, **caractérisé en ce que** l'étape de tri permet de regrouper les échantillons interpolés validés par paquets de façon à constituer une succession de mots.

8. Procédé de lecture selon la revendication 6, **caractérisé en ce qu'**il concerne la lecture d'une seule piste et **en ce que** l'étape de tri consiste à mémoriser les échantillons interpolés au rythme de l'information (VAL) destinée à valider les échantillons interpolés.

9. Système de lecture d'information binaires inscrites sur un support magnétique et situées sur différentes pistes (p1,..., pX) lesdites informations binaires ayant été inscrites sur le support à la fréquence Fbit, comprenant :

- des moyens de lecture permettant de lire lesdites informations binaires à une fréquence d'échantillonnage $F_e$ supérieure à la fréquence Fbit et lisant simultanément les informations binaires de même rang k sur les différentes pistes de façon à obtenir une succession d'échantillons lus successifs ECH(k) pour chaque piste, k étant le rang de l'échantillon ECH(k) sur chaque piste chaque échantillon lu de rang k ayant sa phase $\varphi(k)$ comprise entre 0 et $2\pi$;
- des moyens d'interpolation permettant de calculer un échantillon interpolé I(k) de phase égale à $\pi$ pour chaque échantillon lu ECH(k) à partir de l'échantillon ECH(k) et des i + j échantillons lus qui encadrent l'échantillon ECH(k) sur la même piste de façon que :

$$I(k) = a_{k-i} \, ECH(k-i) + ... + a_k \, ECH(k) + ... + a_{k+j} \, ECH(k+j),$$

les coefficients $a_{k-i}$, ... , $a_k$, ... , $a_{k+j}$ ayant des valeurs dépendant de la loi d'interpolation choisie, et
- des moyens de validation permettant de générer une information (VAL) destinée à valider ou à invalider l'échantillon interpolé I(k),
lesdits moyens d'interpolation prévoyant des moyens de retard de façon que les échantillons successifs traités représentent des informations successives d'une même piste.

10. Système de lecture d'information selon la revendication 9, **caractérisé en ce qu'**il comporte :

- une tête de lecture magnéto-optique permettant de transformer en informations lumineuses les informations binaires lues simultanément sur au moins une piste à la fréquence d'échantillonnage $F_e$,
- un dispositif photosensible à transfert de charges recueillant lesdites informations lumineuses et permettant de transformer lesdites informations lumineuses en une succession d'échantillons de tension, ledit dispositif photosensible comprenant au moins une sortie évacuant lesdits échantillons de tension,
- des moyens de retard (1, 2) reliés à ladite sortie et permettant de réarranger les échantillons de tension recueillies sur ladite sortie de façon à obtenir une succession d'échantillons lus successifs ECH(k) d'une même piste, k étant le rang de l'échantillon ECH(k) sur la piste, des moyens d'interpolation permettant de calculer un échantillon interpolé I(k) pour chaque échantillon lu ECH(k) à partir de l'échantillon ECH(k) et des i + j échantillons lus qui encadrent l'échantillon ECH(k) de façon que :

$$I(k) = a_{k-i} \, ECH(k-i) + ... + a_k \, ECH(k) + ... + a_{k+j} \, ECH(k+j),$$

les coefficients $a_{k-i}$, ... , $a_k$, ... , $a_{k+j}$ ayant des valeurs dépendant de la loi d'interpolation choisie, et des moyens de validation permettant de générer une information (VAL) destinée à valider ou à invalider l'échantillon interpolé I(k).

11. Système de lecture d'informations binaires selon l'une des revendications 9 ou 10, **caractérisé en ce que** les moyens d'interpolation sont constitués de i + j + 1 multiplicateurs (7, 8, 9), chaque multiplicateur ayant une première entrée et une deuxième entrée, et d'un sommateur (10), les i + j + 1 échantillons successifs ECH (k-i), ... , ECH (k), .... , ECH (k+j) étant respectivement appliqués à la première entrée des i + j + 1 multiplicateurs (7, 8, 9), les deuxièmes entrées desdits multiplicateurs recevant les coefficients respectifs $a_{k-i}$, ... , $a_k$, ... , $a_{k+j}$, le résultat issu de chaque multiplicateur étant envoyé dans le sommateur (10) de façon à obtenir l'échantillon interpolé I(k), et **en ce que** les moyens de validation sont constitués d'un opérateur de validation (6) sur lequel sont envoyés la phase $\varphi(k)$ de l'échantillon lu ECH(k) et la phase $\varphi(k+1)$ de l'échantillon lu ECH(k+1) de façon que si la quantité $\pi + \pi$ appartient à l'intervalle $[\varphi(k), \varphi(k+1)[$, ledit opérateur de validation génère un signal (VAL) permettant de valider l'échantillon interpolé et si la quantité $\pi + \pi$ n'appartient pas audit intervalle, ledit opérateur de validation génère un signal permettant de ne pas valider l'échantillon interpolé.

12. Système de lecture l'une quelconque des revendications 9, 10 ou 11, **caractérisé en ce qu'**il comprend un opérateur de tri (TRI) permettant de ne conserver que les échantillons interpolés validés.

13. Système de lecture selon l'une quelconque des revendications 10 à 12, **caractérisé en ce que** le dispositif photosensible à transfert de charges est constitué d'une zone photosensible constituée d'une barrette linéaire de pixels et d'une zone non photosensible constitué d'un registre de lecture (RL) constitué d'étages de transfert, les charges générées dans un pixel étant recueillies dans un étage de transfert du registre de lecture, le registre de lecture (RL) étant constitué de Q sous-registres (R1, R2, ... Rj, ... , RQ), chaque sous-registre Rj comprenant M étages de transfert, M étant un nombre entier quelconque pouvant être différent pour deux sous-registres différents, les M étages de transfert de chaque sous-registre se succédant de façon que le transfert des charges s'effectue de l'étage de rang 1 vers l'étage de rang M, l'étage de transfert de rang M de chaque sous-registre comprenant une diode de lecture permettant de convertir en variations de tension les variations de charges qu'elle détecte, chaque diode de lecture de chaque sous-registre constituant une sortie du registre de lecture (RL).

14. Système de lecture selon l'une des revendications 9 ou 10, **caractérisé en ce que** le support magnétique comporte plusieurs pistes d'informations lisibles de manière non synchrone.

15. Procédé de lecture selon la revendication 1, **caractérisé en ce que** le support magnétique comporte plusieurs pistes d'informations lisibles de manière non synchrone.

**Claims**

1. Process for reading binary information written on a carrier and situated on various tracks (p1,... ,pX), the said binary information having been written on the carrier at the frequency Fbit, **characterized in that** it comprises a step of reading the said binary information at the sampling frequency $F_e$ greater than the frequency Fbit and simultaneously reading the binary information of like order k on the various tracks so as to construct a succession of successive samples read SAM(k) for each track, SAM(k) being the sample read of order k, each sample read of order k having its phase $\varphi(k)$ lying between 0 and $2\pi$,
   a step of interpolation making it possible to calculate an interpolated sample I(k) of phase equal to $\pi$ corresponding to the sample read SAM(k), on the basis of the sample read SAM(k) and of the i+j samples read (SAM(k-i), ..., SAM(k+j)) on the same track and which flank the sample read SAM(k) in such a way that:

$$I(k) = a_{k-i}SAN(k-i) + ... + a_k SAM(k) + ... +$$

$$a_{k+j}SAM(k+j),$$

   the coefficients $a_{k-i}$, ..., $a_k$, ..., $a_{k+j}$ having values depending on the interpolation law chosen, and a step of validation making it possible to generate an information item (VAL) intended to validate or to invalidate the interpolated sample I(k),
   the said interpolation step incorporating delay phases in such a way that the successive samples processed represent the successive information items of one and the same track.

2. Reading process according to Claim 1, **characterized in that** the validation step consists in comparing the quantity $\pi + \pi$ with the interval $[\varphi(k), \varphi(k+1)$ [ in such a way that the said information item (VAL) makes it possible to validate the interpolated sample I(k) if $\pi + \pi$ belongs to the said interval or not to validate the interpolated sample I(k) if $\pi + \pi$ does not belong to the said interval.

3. Reading process according to either of Claims 1 and 2, **characterized in that** the values of the coefficients $a_{k-i}$, ..., $a_k$, ..., $a_{k+j}$ are included in tables and are selected as a function of the value of the phase $\varphi(k)$ of the sample SAM(k).

4. Reading process according to Claim 3, **characterized in that** the values of the said coefficients are precalculated for N phase segments which divide the interval $[0, 2\pi]$ and **in that** the values chosen for the said coefficients are those corresponding to the phase interval to which the phase $\varphi(k)$ of the sample SAM(k) belongs.

5. Reading process according to either of Claims 1 and 2, **characterized in that** the values which the quantities $a_{k-i}SAM(k-i)$, ..., $akSAM(k)$, ..., $a_{k+j}SAM(k+j)$ can take are precalculated for N phase segments which divide the interval $[0, 2\pi]$, the values of the samples SAM(k-i), ..., SAM(k), ..., SAM(k+j) being taken from among all the values which can be taken by the said samples, and **in that** the values chosen for the said quantities are those corresponding to the value of the sample SAM(k) and to the phase interval to which the phase $\varphi(k)$ of the sample SAM(k) belongs.

6. Reading process according to any one of the preceding claims, **characterized in that** it comprises a step of sorting the interpolated samples according to whether the said interpolated samples are to be validated or not validated.

7. Reading process according to Claim 6, **characterized in that** the sorting step makes it possible to group the validated interpolated samples into packets in such a way as to construct a succession of words.

8. Reading process according to Claim 6, **characterized in that** it relates to the reading of a single track and **in that** the sorting step consists in storing the interpolated samples in tempo with the information item (VAL) intended to validate the interpolated samples.

9. System for reading binary information written on a magnetic carrier and situated on various tracks (p1, ...,pX), the said binary information having been written on the carrier at the frequency Fbit, comprising:

   - reading means making it possible to read the said binary information at a sampling frequency $F_e$ greater than the frequency Fbit and simultaneously reading the binary information of like rank k on the various tracks so as to obtain a succession of successive samples read SAM(k) for each track, k being the rank of the sample SAM(k) on each track, each sample read of rank k having its phase $\varphi(k)$ lying between 0 and $2\pi$;

- means of interpolation making it possible to calculate an interpolated sample I(k) of phase equal to $\pi$ for each sample read SAM(k) on the basis of the sample SAM(k) and of the i+j samples read which flank the sample SAM(k) on the same track in such a way that:

$$I(k) = a_{k-i}SAM(k-i) + ... + a_k SAM(k) + ... +$$

$$a_{k+j}SAM(k+j),$$

the coefficients $a_{k-i}$, ..., $a_k$, ..., $a_{k+j}$ having values depending on the interpolation law chosen, and
- means of validation making it possible to generate an information item (VAL) intended to validate or to invalidate the interpolated sample I(k),
the said interpolation means providing delay means in such a way that the successive samples processed represent successive information items of one and the same track.

10. Information reading system according to Claim 9, **characterized in that** it comprises:

- a magneto-optical reading head making it possible to transform into luminous information the binary information read simultaneously on at least one track at the sampling frequency $F_e$,
- a charge transfer photosensitive device gathering the said luminous information and making it possible to transform the said luminous information into a succession of voltage samples, the said photosensitive device comprising at least one output delivering the said voltage samples,
- delay means (1, 2) linked to the said output and making it possible to rearrange the voltage samples gathered on the said output in such a way as to obtain a succession of successive samples read SAM(k) of one and the same track, k being the rank of the sample SAM(k) on the track, interpolation means making it possible to calculate an interpolated sample I(k) for each sample read SAM(k) on the basis of the sample SAM(k) and of the i+j samples read which flank the sample SAM(k) in such a way that:

$$I(k) = a_{k-i}SAM(k-i) + ... + a_k SAM(k) + ... + B_{k+j}$$

$$SAM(k+j),$$

the coefficients $a_{k-i}$, ..., $a_k$, ..., $a_{k+j}$ having values depending on the interpolation law chosen, and validation means making it possible to generate an information item (VAL) intended to validate or to invalidate the interpolated sample I(k).

11. System for reading binary information according to either of Claims 9 and 10, **characterized in that** the interpolation means consist of i+j+1 multipliers (7, 8, 9), each multiplier having a first input and a second input, and of a summator (10), the i+j+1 successive samples SAM(k-i), ..., SAM(k), ..., SAM(k+j) being respectively applied to the first input of the i+j+1 multipliers (7, 8, 9), the second inputs of the said multipliers receiving the respective coefficients $a_{k-i}$, ..., $a_k$, ..., $a_{k+j}$, the result emanating from each multiplier being sent to the summator (10) so as to obtain the interpolated sample I(k), and **in that** the validation means consist of a validation operator (6) to which are sent the phase $\varphi(k)$ of the sample read SAM(k) and the phase $\varphi(k+1)$ of the sample read SAM(k+1) in such a way that, if the quantity $\pi + \pi$ belongs to the interval $[\varphi(k), \varphi(k+1)[$, the said validation operator generates a signal (VAL) making it possible to validate the interpolated sample and, if the quantity $\pi + \pi$ does not belong to the said interval, the said validation operator generates a signal making it possible not to validate the interpolated sample.

12. Reading system according to any one of Claims 9, 10 or 11, **characterized in that** it comprises a sorting operator (SORT) making it possible to keep only the validated interpolated samples.

13. Reading system according to any one of Claims 10 to 12, **characterized in that** the charge transfer photosensitive device consists of a photosensitive zone consisting of a linear array of pixels and of a nonphotosensitive zone consisting of a reading register (RL) consisting of transfer stages, the charges generated in a pixel being gathered in a transfer stage of the reading register, the reading register (RL) consisting of Q subregisters (R1, R2, ... Rj, ..., RQ), each subregister Rj comprising M transfer stages, M being any integer number which can be different for two different subregisters, the M transfer stages of each subregister following one another in such a way that the charges are transferred from the stage of rank 1 to the stage of rank M, the transfer stage of rank M of each subregister comprising a reading diode making it possible to convert the charge variations which it detects into voltage variations, each reading diode of each subregister constituting an output of the reading register (RL).

**14.** Reading system according to either of Claims 9 and 10, **characterized in that** the magnetic carrier comprises several nonsynchronously readable information tracks.

**15.** Reading process according to Claim 1, **characterized in that** the magnetic carrier comprises several nonsynchronously readable information tracks.

**Patentansprüche**

**1.** Verfahren zum Lesen binärer Informationen, die in einen Träger geschrieben sind und sich in verschiedenen Spuren (p1, ..., pX) befinden, wobei die binären Informationen in den Träger mit der Frequenz Fbit geschrieben worden sind, **dadurch gekennzeichnet, daß** es umfaßt:

einen Schritt, in dem die binären Informationen mit der Abtastfrequenz $F_e$, die größer als die Frequenz Fbit ist, gelesen werden und gleichzeitig die binären Informationen derselben Ordnung k in den verschiedenen Spuren gelesen werden, derart, daß eine Folge aufeinanderfolgender gelesener Abtastwerte ECH(k) für jede Spur gebildet wird, wobei ECH(k) der gelesene Abtastwert der Ordnung k ist, wobei jeder gelesene Abtastwert der Ordnung k eine Phase φ(k) im Bereich von 0 bis 2π besitzt,

einen Interpolationsschritt, der es ermöglicht, einen interpolierten Abtastwert I(k) mit Phase π, der dem gelesenen Abtastwert ECH(k) entspricht, anhand des gelesenen Abtastwerts ECH(k) und der i + j gelesenen Abtastwerte (ECH(k - i), ..., ECH(k + j)) in derselben Spur, die den gelesenen Abtastwert ECH(k) umgeben, zu berechnen, derart, daß:

$$I(k) = a_{k-i}ECH(k - i) + ... + a_kECH(k) + ... + a_{k+j}ECH(k + j),$$

wobei die Koeffizienten $a_{k-i}$, ..., $a_k$, ..., $a_{k+j}$ Werte besitzen, die vom gewählten Interpolationsgesetz abhängen, und

einen Validierungsschritt, der es ermöglicht, eine Information (VAL) zu erzeugen, die dazu bestimmt ist, den interpolierten Abtastwert I(k) für gültig oder ungültig zu erklären,

wobei der Interpolationsschritt Verzögerungsphasen enthält, derart, daß die verarbeiteten aufeinanderfolgenden Abtastwerte aufeinanderfolgende Informationen derselben Spur repräsentieren.

**2.** Leseverfahren nach Anspruch 1, **dadurch gekennzeichnet, daß** der Validierungsschritt darin besteht, die Größe π + π mit dem Intervall [φ(k), φ(k + 1)[ zu vergleichen, derart, daß es die Information (VAL) ermöglicht, den interpolierten Abtastwert I(k) für gültig zu erklären, falls π + π in diesem Intervall enthalten ist, oder den interpolierten Abtastwert I(k) für nicht gültig zu erklären, falls π + π nicht in diesem Intervall enthalten ist.

**3.** Leseverfahren nach einem der Ansprüche 1 oder 2, **dadurch gekennzeichnet, daß** die Werte der Koeffizienten $a_{k-i}$, ..., $a_k$, $a_{k+j}$ in Tabellen enthalten sind und in Abhängigkeit vom Wert der Phase φ(k) des Abtastwerts ECH(k) ausgewählt werden.

**4.** Leseverfahren nach Anspruch 3, **dadurch gekennzeichnet, daß** die Werte der Koeffizienten für N Phasensegmente, die das Intervall [0, 2π] unterteilen, im voraus berechnet werden und daß die für die Koeffizienten gewählten Werte jene sind, die dem Phasenintervall entsprechen, zu dem die Phase φ(k) des Abtastwerts ECH(k) gehört.

**5.** Leseverfahren nach einem der Ansprüche 1 oder 2, **dadurch gekennzeichnet, daß** die Werte, die die Größen $a_{k-i}ECH(k - i)$, ..., $a_kECH(k)$, ..., $a_{k+j}ECH(k + j)$ annehmen können, für N Phasensegmente, die das Intervall [0, 2π] unterteilen, im voraus berechnet werden, wobei die Werte der Abtastwerte ECH(k - i), ..., ECH(k), ..., ECH(k + j) aus allen Werten genommen werden, die die Abtastwerte annehmen können, und daß die für die Größen gewählten Werte jene sind, die dem Abtastwert ECH(k) und dem Phasenintervall, zu dem die Phase φ(k) des Abtastwertes ECH(k) gehört, entsprechen.

**6.** Leseverfahren nach einem der vorhergehenden Ansprüche, **dadurch gekennzeichnet, daß** es einen Schritt umfaßt, in dem die interpolierten Abtastwerte je nachdem, ob die interpolierten Abtastwerte für gültig oder nicht gültig erklärt werden müssen, sortiert werden.

**7.** Leseverfahren nach Anspruch 6, **dadurch gekennzeichnet, daß** der Sortierungsschritt ermöglicht, die für gültig erklärten interpolierten Abtastwerte in Paketen anzuordnen, derart, daß eine Folge von Wörtern gebildet wird.

**8.** Leseverfahren nach Anspruch 6, **dadurch gekennzeichnet, daß** es das Lesen einer einzigen Spur betrifft und daß der Sortierungsschritt darin besteht, die interpolierten Abtastwerte im Takt der Information (VAL), die dazu bestimmt ist, die interpolierten Abtastwerte für gültig zu erklären, zu speichern.

**9.** System zum Lesen binärer Informationen, die in einen magnetischen Träger geschrieben sind und sich in verschiedenen Spuren (p1, ..., pX) befinden, wobei die binären Informationen in den Träger mit der Frequenz Fbit geschrieben worden sind, mit:

- Lesemitteln, die es ermöglichen, die binären Informationen mit einer Abtastfrequenz $F_e$, die größer als die Frequenz Fbit ist, zu lesen und gleichzeitig die binären Informationen desselben Rangs k in den verschiedenen Spuren zu lesen, derart, daß eine Folge aufeinanderfolgender gelesener Abtastwerte ECH(k) für jede Spur erhalten wird, wobei k der Rang des Abtastwerts ECH(k) in jeder Spur ist, wobei jeder gelesene Abtastwert mit Rang k eine Phase $\varphi(k)$ im Bereich von 0 bis $2\pi$ besitzt;

- Interpolationsmitteln, die es ermöglichen, einen interpolierten Abtastwert I(k) mit Phase $\pi$ für jeden gelesenen Abtastwert ECH(k) anhand des Abtastwerts ECH(k) und der i + j gelesenen Abtastwerte, die den Abtastwert ECH(k) in derselben Spur umgeben, zu berechnen, derart, daß:

$$I(k) = a_{k-i}ECH(k - i) + ... + a_k ECH(k) + ... + a_{k+j}ECH(k + j),$$

wobei die Koeffizienten $a_{k-i}$, ..., $a_k$, ..., $a_{k+j}$ Werte besitzen, die vom gewählten Interpolationsgesetz abhängen, und

- Validierungsmitteln, die es ermöglichen, eine Information (VAL) zu erzeugen, die dazu bestimmt ist, den interpolierten Abtastwert I(k) für gültig oder für nicht gültig zu erklären,

wobei die Interpolationsmittel Verzögerungsmittel vorsehen, derart, daß die verarbeiteten aufeinanderfolgenden Abtastwerte aufeinanderfolgende Informationen derselben Spur repräsentieren.

**10.** System zum Lesen von Informationen nach Anspruch 9, **dadurch gekennzeichnet, daß** es umfaßt:

- einen magnetooptischen Lesekopf, der ermöglicht, die gleichzeitig in wenigstens einer Spur mit der Abtastfrequenz $F_e$ gelesenen binären Informationen in Lichtinformationen umzuwandeln,

- eine lichtempfindliche Vorrichtung mit Ladungsübertragung, die die Lichtinformationen sammelt und es ermöglicht, die Lichtinformationen in eine Folge von Spannungsabtastwerten umzuwandeln, wobei die lichtempfindliche Vorrichtung wenigstens einen Ausgang aufweist, an dem die Spannungsabtastwerte ausgegeben werden, und

- Verzögerungsmittel (1, 2), die mit dem Ausgang verbunden sind und es ermöglichen, die am Ausgang gesammelten Spannungsabtastwerte umzuordnen, derart, daß eine Folge aufeinanderfolgender gelesener Abtastwerte ECH(k) derselben Spur erhalten wird, wobei k der Rang des Abtastwerts ECH(k) in der Spur ist, wobei die Interpolationsmittel es ermöglichen, einen interpolierten Abtastwert I(k) für jeden gelesenen Abtastwert ECH(k) anhand des Abtastwerts ECH(k) und der i + j gelesenen Abtastwerte, die den Abtastwert ECH(k) umgeben, zu berechnen, derart, daß

$$I(k) = a_{k-i}ECH(k - i) + ... + a_k ECH(k) + ... + a_{k+j}ECH(k + j),$$

wobei die Koeffizienten $a_{k-i}$, ..., $a_k$, ..., $a_{k+j}$ Werte besitzen, die vom gewählten Interpolationsgesetz abhängen, und wobei die Validierungsmittel es ermöglichen, eine Information (VAL) zu erzeugen, die dazu bestimmt ist, den interpolierten Abtastwert I(k) für gültig oder nicht gültig zu erklären.

11. System zum Lesen binärer Informationen nach einem der Ansprüche 9 oder 10, **dadurch gekennzeichnet, daß** die Interpolationsmittel aus i + j + 1 Multiplizierern (7, 8, 9), wovon jeder einen ersten Eingang und einen zweiten Eingang besitzt, und aus einem Summierer (10) gebildet sind, wobei die i + j + 1 aufeinanderfolgenden Abtastwerte ECH(k - i), ..., ECH(k), ..., ECH(k + j) in den ersten Eingang eines entsprechenden der i + j + 1 Multiplizierer (7, 8, 9) eingegeben werden, während die zweiten Eingänge der Multiplizierer die entsprechenden Koeffizienten $a_{k-i}$, ..., $a_k$, ..., $a_{k+j}$ empfangen, wobei das von jedem Multiplizierer ausgegebene Ergebnis in den Summierer (10) geschickt wird, derart, daß der interpolierte Abtastwert I(k) erhalten wird, und daß die Validierungsmittel aus einem Validierungsoperator (6) gebildet sind, an den die Phase $\varphi(k)$ des gelesenen Abtastwerts ECH(k) und die Phase $\varphi(k + 1)$ des gelesenen Abtastwerts ECH(k + 1) geschickt werden, derart, daß der Validierungsoperator dann, wenn die Größe $\pi + \pi$ zu dem Intervall [$\varphi(k)$, $\varphi(k + 1)$[ gehört, ein Signal (VAL) erzeugt, das es ermöglicht, den interpolierten Abtastwert für gültig zu erklären, und daß der Validierungsoperator dann, wenn die Größe $\pi + \pi$ nicht zu diesem Intervall gehört, ein Signal erzeugt, das es ermöglicht, den interpolierten Abtastwert für nicht gültig zu erklären.

12. Lesesystem nach einem der Ansprüche 9, 10 oder 11, **dadurch gekennzeichnet, daß** es einen Sortierungsoperator (TRI) umfaßt, der ermöglicht, nur die für gültig erklärten interpolierten Abtastwerte beizubehalten.

13. Lesesystem nach einem der Ansprüche 10 bis 12, **dadurch gekennzeichnet, daß** die lichtempfindliche Vorrichtung mit Ladungsübertragung aus einer lichtempfindlichen Zone, die aus einer geradlinigen Anordnung von Bildelementen gebildet ist, und aus einer nicht lichtempfindlichen Zone gebildet ist, welche aus einem aus Übertragungsstufen gebildeten Leseregister (RL) gebildet ist, wobei die in einem Bildelement erzeugten Ladungen in einer Übertragungsstufe des Leseregisters gesammelt werden, das Leseregister (RL) aus Q Unterregistern (R1, R2, ..., Rj, ..., RQ) gebildet ist, jedes Unterregister Rj M Übertragungsstufen umfaßt, wobei M eine beliebige ganze Zahl ist, die für zwei verschiedene Unterregister verschieden sein kann, die M Übertragungsstufen jedes Unterregisters in der Weise aufeinander folgen, daß die Übertragung von Ladungen von der Stufe mit Rang 1 zur Stufe mit Rang M erfolgt, die Übertragungsstufe mit Rang M jedes Unterregisters eine Lesediode enthält, die es ermöglicht, die Ladungsveränderungen, die sie erfaßt, in Spannungsänderungen umzuwandeln, und jede Lesediode jedes Unterregisters einen Ausgang des Leseregisters (RL) bildet.

14. Lesesystem nach einem der Ansprüche 9 oder 10, **dadurch gekennzeichnet, daß** der magnetische Träger mehrere Informationsspuren umfaßt, die asynchron lesbar sind.

15. Leseverfahren nach Anspruch 1, **dadurch gekennzeichnet, daß** der magnetische Träger mehrere Informationsspuren umfaßt, die asynchron lesbar sind.

FIG. 1

EP 0 766 863 B1

FIG.2

EP 0 766 863 B1

FIG.3

FIG.4

EP 0 766 863 B1

FIG.5

EP 0 766 863 B1

FIG.6

EP 0 766 863 B1

F →

Phi 1     Phi 2     Phi 1     Vg     Phi 1

E1   E2    3   E3    E4     E6    E7     4   Kj    6

2

$N^-$   N   $N^-$   N   $N^-$   N   $N^-$   $N^+$   $P^+$   $N^-$   N

P

ET     1     ESj     5     ET

d

Rj        Rj+1

# FIG.7

EP 0 766 863 B1

F →

Phi 1    Phi 2    Phi 1    Vg    Vi    Phi 1

E1    E2    E3    E4    E6    E7    4    Kj    7

2    3    5

N⁻  N  N⁻  N  N⁻  N  N⁻  N⁺  N⁻  N⁻  N

P

ET    1    ESj    ET

d

Rj    Rj+1

# FIG.8